# EUROPEAN PATENT SPECIFICATION

(11) **EP 2 582 271 B1**
(45) Date of publication and mention of the grant of the patent: **28.11.2018**
(21) Application number: 11729748.1
(22) Date of filing: 14.06.2011
(51) Int. Cl.: A47J 31/44

(54) **DEVICE FOR FROTHING A LIQUID**
VORRICHTUNG ZUM AUFSCHÄUMEN EINER FLÜSSIGKEIT
DISPOSITIF DESTINÉ À FAIRE MOUSSER UN LIQUIDE

(30) Priority: 18.06.2010 EP 10166464
(43) Date of publication of application: 24.04.2013
(73) Proprietor: Koninklijke Philips N.V., 5656 AE Eindhoven (NL)
(72) Inventor: NOORDHUIS, Joeke, NL-5656 AE Eindhoven (NL); DAY, Richard, Francis, NL-5656 AE Eindhoven (NL); WRENCH, Nathan, James, NL-5656 AE Eindhoven (NL)
(74) Representative: Coops, Peter
(86) International application number: PCT/IB2011/052566
(87) International publication number: WO 2011/158171

(56) References cited:
- EP-A1- 0 344 859
- EP-A1- 0 813 834
- EP-A1- 1 371 311
- WO-A1-2009/155972
- DE-A1- 4 037 366
- US-A- 5 295 431
- US-B1- 6 499 389

## Description

### FIELD OF THE INVENTION

The present invention relates to a device for frothing a liquid.

Furthermore, the present invention relates to an appliance which is suitable to be used for making a beverage containing a frothed liquid, comprising a device for frothing a liquid, wherein the device is removably arranged in the appliance.

### BACKGROUND OF THE INVENTION

Frothing a liquid involves supplying a gas like air to the liquid and mixing the liquid with the gas, for the purpose of obtaining a mass of bubbles in the liquid, which is referred to as foam. In many cases, the liquid to be frothed is milk. Especially in the field of making coffee and coffee specialties, there is a need for a device which is capable of frothing milk in a user-friendly manner. It is a well-known option to combine a frothing process of milk with a heating process of milk, wherein air is supplied to the milk for obtaining foam, and wherein steam is supplied to the milk for increasing the temperature of the milk.

EP 0813834 A1 discloses a device for frothing and heating liquids such as milk and the like. The device comprises a number of interconnected bodies, wherein one of the bodies is connected to an end of a flexible pipe, another end of which is immersed in a container containing the liquid to be frothed. The body is also connected to a pipe for supplying steam. In particular, the body is internally hollow, and the connections to the pipes for supplying the liquid and the steam are such that the liquid and the steam are supplied to the internal space of the body during operation of the device. The body is provided with a hole which serves for allowing air to flow to the internal space of the body as well.

The steam is supplied to the internal space of the body through a constriction, as a result of which a vacuum is obtained during operation of the device, which causes suction of the milk into the internal space. Furthermore, the sucked-in milk produces in turn a vacuum such as to suck in external air. In the process, the air is mixed with the milk, wherein the desired froth is obtained. The temperature of the milk is increased under the influence of the steam.

In general, it is known to supply air to be used in a frothing process of a liquid through a hole or a channel to a space where the frothing process is intended to take place. It appears in practice that such a hole or channel always gets contaminated as time passes, assuming frequent use of the device in which the frothing process takes place. In many cases, the hole or channel is relatively narrow, which renders it sensitive to contamination, wherein it is especially vulnerable to clogging with milk fats, milk stone and bacterial growth. Moreover, the hole or channel is difficult to clean as a result of a small cross-sectional area. For sake of completeness, it is noted that the inside of the hole or channel is reached by the milk under the influence of inevitable pressure fluctuations occurring during practical use.

An alternative device for frothing liquids is disclosed in EP 1371311 A1.

It is noted that many possible routes for solving the problems as mentioned in the foregoing have been explored, including a use of scrapers, a use of duckbill valves, another positioning of narrow passages, and many more. However, these known solutions only offer temporary relief from contamination problems, as these solutions do not provide complete prevention of an accumulation of milk residue. Hence, even though improvements may be realized, it still happens that the milk residue accumulates until a certain threshold is exceeded, at which a proper functioning of the device is no longer possible.

### SUMMARY OF THE INVENTION

It is an object of the present invention to provide a solution to the problem of a hole or channel for allowing air to flow to a space where a frothing process of a liquid is supposed to take place getting clogged over time. Hence, it is an object of the present invention to provide a new concept for a device for frothing a liquid, in which a predetermined airflow is always guaranteed, so that the frothing process can take place under predetermined conditions, and the quality of the foam that is obtained as a result of the frothing process remains constant.

The object of the present invention is achieved by a device for frothing milk, comprising a first unit and a second unit, wherein the first unit comprises a first space having an open side serving as an outlet for allowing content from the space to flow out of the space, and a milk supply channel connected to the first space, wherein the second unit comprises a second space for allowing the milk to mix with air in order for a frothing process to take place, wherein the second space is open to the first space, and has an open side facing the outlet of the first space and serving as an inlet for receiving content from the first space, wherein the inlet of the second space and the outlet of the first space are located at a distance with respect to each other, in a concentric arrangement, wherein an area of the inlet of the second space is larger than an area of the outlet of the first space, and wherein, at the position where the inlet of the second space and the outlet of the first space face each other, the units of the device are separated by air, allowing for a supply of the air to the second space under the influence of a flow of milk from the first space to the second space, wherein the device further comprises means for pumping the milk towards the outlet of the first space, wherein the pumping means comprise a steam supply channel connected to the space through a constriction, and wherein the milk supply channel extends perpendicularly to the steam supply channel.

According to the present invention, the device has two internal spaces, wherein each of the internal spaces is accessible through at least one opening which allows for a free flow of fluids to and/or from the space, wherein in a first space, the at least one opening is destined to function as an outlet of fluids, and wherein in a second space, the at least one opening is destined to function as an inlet of fluids. The outlet of the first space and the inlet of the second space are separated from each other by air. Hence, during operation of the device, the air is present between the outlet of the first space and the inlet of the second space.

As the second space is open to the first space, it is possible for the liquid to be frothed, i.e. the milk, which is supplied to the first space in the first instance, to flow from the first space to the second space. In the process, under the influence of the flow of the liquid, the air is made to flow as well, along with the liquid, so that the air enters the second space. Consequently, a frothing process can be carried out in the second space, wherein the entrained air interacts with the liquid.

In the device according to the present invention, the supply of air for the purpose of frothing is not realized by using a hole or a channel providing access to a space where the frothing is supposed to take place. Instead, there are two separate spaces, wherein one of the spaces is arranged such as to receive content from another of the spaces, wherein air is present between the inlet of the one space and the outlet of the other space. As a result, air is free to enter the spaces through their openings. A flow of air can be obtained under the influence of a flow of liquid from one space to another, wherein the air is taken along by the liquid as a secondary flow. In any case, the openings of the spaces and between the inlet of the one space and the outlet of the other space are considerably larger than conventional holes or channels for supplying air, so that clogging is virtually impossible.

Like conventional devices, the device according to the present invention comprises a space in which a frothing process is supposed to take place during operation of the device, namely the space which is denoted as second space. A unique aspect of the device according to the present invention resides in the fact that the liquid to be frothed is supplied through another space which is not directly connected to the second space, i.e. the space which is denoted as first space. In order to allow for a transfer of the liquid to be frothed from the first space to the second space, the second space is open to the first space. A supply of the air to the second space takes place at a position between the outlet of the first space and the inlet of the second space. When there is a flow of liquid from the first space to the second space, the air is drawn into the second space, along with the liquid. Hence, there is no need for one or more dedicated holes or channels for supplying air to the second space, and the device according to the present invention can do without such restricted air supplying means.

The inlet of the second space is an open side of the second space which faces the outlet of the first space. The inlet of the second space and the outlet of the first space are located at a distance with respect to each other, so that when liquid flows from the first space to the second space, the liquid really crosses a gap between the spaces. In a practical embodiment of the device according to the present invention, the distance may be in an order of millimeters, for example, in a range from 1 mm to 10 mm.

An area of the inlet of the second space is larger than an area of the outlet of the first space. Hence, irrespective of the distance between the inlet of the second space and the outlet of the first space, the supply of air to the second space can take place in a virtually unhindered manner, since there is a portion of the inlet of the second space that can be totally free from any coverage. Also, the change from a smaller area to a larger area causes a suction effect on the air when there is a flow of liquid from the one area to the other area.

The outlet of the first space and the inlet of the second space have a concentric arrangement, so that the air can flow to the inlet of the second space at the entire circumference of that inlet when the area of that inlet is relatively large as explained in the foregoing. In any case, the concentric arrangement is a factor contributing to the prevention of spillage of liquid, as such an arrangement can be easily realized in such a way that the second space is capable of receiving all of the liquid flowing from the first space.

It is very practical for the outlet of the first space to be a free end of a tube which is arranged in the device according to the present invention, and for the inlet of the second space to be a free end of another tube which is part of the device. In that case, the concentric arrangement of the outlet of the first space and the inlet of the second space as mentioned in the foregoing is achieved when the tubes are arranged such that longitudinal axes of the tubes, as extending at the free ends of the tubes, are aligned.

In order to ensure a steady flow of liquid to be frothed from the first space to the second space, the device according to the present invention is provided with means for pumping the liquid towards the outlet of the first space. The pumping means comprise means for supplying steam to the first space, which are connected to the space through a constriction. In this case, a pumping effect is obtained on the basis of the fact that the speed of the steam is increased when the steam passes through the constriction, while the static pressure is lowered. Hence, when the steam reaches the space, which has a significantly larger cross-sectional area than the constriction, suction forces are generated, under the influence of which the liquid can be put in motion. Steam is a suitable pumping fluid, which may not only have a function in pumping the liquid to be frothed to the outlet of the first space, but also in heating the liquid at the same time. In fact, when steam is used, the steam and the liquid to be frothed are mixed in the first space, and the mixture of the steam and the liquid (droplets) passes on to the second space. In the process, the flow of the mixture of the steam and the liquid may only have a low suction effect on the air that is present between the outlet of the first space and the inlet of the second space, but as the air is not so much hindered as in conventional cases, it is still possible to realize an adequate flow of the air from outside the second space to inside the second space.

In the case that the liquid to be frothed is heated by using steam condensing onto the liquid, the present invention offers a specific advantage. On the basis of the fact that the outlet of the first space and the inlet of the second space are separated by air, no feedback of perturbations from the condensation process, which mainly takes place in the second space, to the supply of the liquid to be frothed, which takes place in the first space, can occur. Consequently, the supply of liquid can be constant, according to predetermined conditions, wherein pressure fluctuations are prevented, and, as a result, spattering is prevented.

Like in conventional devices, each of the means for supplying the liquid to be frothed to the first space and the means for supplying the steam to the same space comprise a channel, wherein the two channels are extending in perpendicular directions.

It follows from the foregoing that the device according to the present invention may be adapted to pump the liquid to be frothed only by means of the steam, wherein the pumping means are free from any components besides the means for supplying the steam to the first space. Among other things, this allows for a compact design of the device.

According to the present invention, a device for frothing a liquid is provided, which may also be adapted to heating the liquid. In the device, the liquid to be frothed follows a path through internal spaces of the device, wherein the path is interrupted at some point, so that it is possible for the air to reach the liquid. In particular, the device comprises two spaces having an inlet and an outlet, respectively, wherein the configuration of the spaces in the device is such that the space having the inlet is open to the space having the outlet, such as to be capable of receiving content emitted through the outlet of that other space. Air is present between the inlet of the one space and the outlet of the other space, and although the spaces are separated, these spaces are coupled to each other through the air, as it were. Advantageously the device for frothing the liquid can be manufactured just by removing an appropriate part from a tube interconnecting the first and the second space. As has been explained before, the air is allowed to flow in and mix with the liquid to be frothed, wherein there is no risk of the intake of the air getting clogged, which is advantageous over conventional situations in which a dedicated hole or channel is used for supplying the air.

The device according to the present invention may be part of an appliance which is suitable to be used for making a beverage containing frothed milk, wherein the device is removably arranged in the appliance. An example of an appliance as mentioned is a coffee maker, wherein the device serves for frothing milk to be added to the coffee product if so desired by a user. The appliance may comprise a reservoir for containing a quantity of the milk to be frothed, which may be removable from the appliance as well, along with the frothing device. This may be convenient in case it is desirable to store the quantity of the milk to be frothed at another place than in the appliance, for example, in a refrigerator.

The above-described and other aspects of the present invention will be apparent from and elucidated with reference to the following detailed description of a device which is designed according to the principles of the present invention, and which serves for frothing a liquid by means of air and heating a liquid by means of steam. First, a description of two devices according to the state of the art will be given, in order to point out the differences between the state of the art and the present invention.

### BRIEF DESCRIPTION OF THE DRAWINGS

The present invention will now be explained in greater detail with reference to the figures, in which equal or similar parts are indicated by the same reference signs, and in which:
Figure 1 diagrammatically shows a configuration of internal spaces and channels of a first conventional device for frothing and heating a liquid;
Figure 2 diagrammatically shows a configuration of internal spaces and channels of a second conventional device for frothing and heating a liquid; and
Figure 3 diagrammatically shows a configuration of internal spaces and channels of a device according to the present invention for frothing and heating a liquid. In the figures, directions of flows are indicated by means of arrows.

### DETAILED DESCRIPTION OF EMBODIMENTS

The present invention is in the field of frothing liquids, and possibly also heating liquids in the process. In this field, a popular option is the use of steam, by means of which several purposes can be achieved. In the first place, the steam has a function in heating up the liquid to be frothed to a desired temperature. In the second place, the steam can be used for driving a transport process of the liquid, while at the same time taking care that a frothing gas such as air can be sucked in. In the third place, steam can even induce refinement of the foam that is obtained in the liquid as a result of the frothing process. The versatility of steam-operated devices in combination with a relatively low number of components which are contaminated with the liquid explains the wide-spread use of such devices.

In the following, two conventional embodiments of a device for frothing and heating a liquid, and one embodiment according to the present invention of such a device will be described, wherein all embodiments relate to the option of using steam for inducing a flow of a liquid to be frothed. The basic principle in this option is that steam is fed into a constriction (which is also referred to as nozzle), thereby increasing its speed and lowering the static pressure. The steam is then delivered to a space in which suction is created by the steam entering the space through the constriction, so that secondary flows may be induced. In case of milk frothing by using air, the secondary flows are flows of milk and air. The design of the device is such that the flow rates are balanced in order to realize a desired temperature of the frothed liquid and desired properties of the foam.

In the following, it is assumed that the liquid to be frothed is milk, and that the gas that is used in the process of frothing the liquid is air. For sake of completeness, it is noted that the present invention is not limited to these specific options.

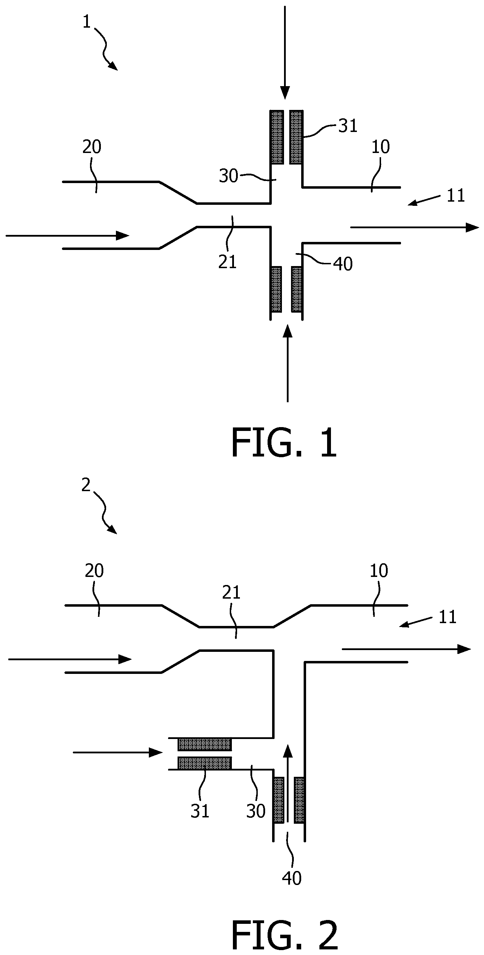

Figure 1 shows a configuration of internal spaces and channels of a first conventional device 1 for frothing and heating milk. On the right side of the figure, a space 10 in which the frothing and heating process takes place during operation of the device 1 is depicted. Frothed and heated milk leaves the space 10 through an open side 11 of the space 10. At an opposite side, a supply channel 20 for supplying steam is connected to the space 10, through a constriction 21. At the position where the steam enters the space 10, two other supply channels 30, 40 are connected to the space 10, namely a supply channel 30 for allowing air to flow to the space 10, and a supply channel 40 for allowing milk to flow to the space 10. Directions in which the air and the milk are taken in are perpendicular to a direction in which steam is supplied and frothed milk is transported.

When the device 1 as shown in figure 1 is operated, steam is supplied to the space 10. The device 1 may be connected to a steam generator (not shown), in which case an outlet of the steam generator is connected to the steam supply channel 20. In view of the fact that the steam reaches the space 10 through a constriction 21, underpressure is created in the space 10, which causes milk and air to be drawn into the space 10. The milk may be taken from a reservoir (not shown) arranged inside or outside of the device 1. Inside the space 10, the steam, the milk, and the air are allowed to interact, so that frothed and heated milk is formed, which is transported to a predetermined destination, preferably to a cup or another receptacle (not shown).

Figure 2 shows a configuration of internal spaces and channels of a second conventional device 2 for frothing and heating milk. This device 2 corresponds to the first device 1 shown in figure 1 to a large extent. A notable difference relates to the positioning of the air supply channel 30. In the second conventional device 2, the air supply channel 30 is connected to the milk supply channel 40. Hence, it is achieved that when steam is supplied to the space 10, milk is caused to flow towards the space 10, and air is drawn in as well, namely under the influence of the flow of milk, wherein the air flows from the air supply channel 30 in the milk supply channel 40. As a result, there is a supply of steam to the space 10, and also a supply of a mixture of milk and air. The final milk product is formed in the space 10 before the product is transported further.

In the first conventional device 1, there is a considerable risk that the air supply channel 30 will get clogged, as the milk is allowed to come close to an end of the air supply channel 30, and to even enter the air supply channel 30 when fluctuations in the pressure prevailing in the space 10 cause the milk to do so. In the second conventional device, the air supply channel 30 is not connected to the space 10, but to the milk supply channel 40. Still, clogging of the air supply channel 30, which results in a decrease of the quality of the foam of the frothed milk, is apt to occur, wherein the clogging of the air supply channel 30 may eventually be of such a nature that the functioning of the device 2 is really hindered, wherein the device 2 is no longer capable of delivering frothed milk of an acceptable quality.

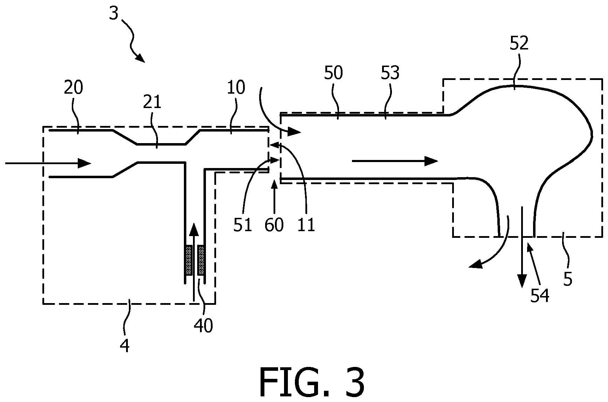

The present invention provides a solution to the problem of the air supply channel 30 getting clogged over time. This solution will be further explained on the basis of figure 3, which shows a configuration of internal spaces and channels of a device 3 according to the present invention for frothing and heating a liquid.

It appears from figure 3 that the device 3 according to the present invention comprises two portions 4, 5. In the figure, these portions 4, 5 are diagrammatically indicated by means of dashed lines. In the following, these portions 4, 5 will be referred to as first unit 4 and second unit 5, wherein the first unit 4 is the portion 4 that is depicted at the left side of figure 3, and wherein the second unit 5 is the portion 5 that is depicted at the right side of figure 3.

Like the conventional devices 1, 2 as shown in figures 1 and 2, the first unit 4 of the device 3 according to the present invention comprises a space 10, a steam supply channel 20 which is connected to the space 10 through a constriction 21, and a milk supply channel 40 which is connected to the space 10 as well, and which is extending perpendicular to the steam supply channel 20. However, the first unit 4 does not comprise an air supply channel 30. When the device 3 is operated, a frothing process does not take place in the space 10 of the first unit 4. Instead, a mixture of steam and milk is obtained, wherein the milk is drawn into the space 10 under the influence of the steam, and is heated by the steam. Furthermore, the mixture of steam and milk is discharged as a jet through the open side 11 of the space 10, which serves as an outlet 11 of the space 10.

Like the first unit 4, the second unit 5 comprises a space 50 having an open side 51, wherein the open side 51 of the space 50 as mentioned is present at a distance from the open side 11 of the space 10 of the first unit 4, in a concentric arrangement with the open side 11 of the space 10 of the first unit 4, and wherein the open sides 11, 51 of the spaces 10, 50 are separated by a free space 60, i.e. by air. Hence, when a jet of a mixture of steam and milk flows from the first unit 4, this jet crosses the free space 60, and is received by the space 50 of the second unit 5, wherein the open side 51 of the space 50 serves as an inlet 51 of the space 50. It should be noted that at the time of the crossing of the free space 60, only part of the steam has condensed onto the milk. Therefore, it is justified to still mention a mixture of steam and milk.

Under the influence of the jet of the mixture of steam and milk, air is drawn into the space 50 of the second unit 5. In order to enhance the suction effect of the jet on the air, the open side 51 of the space 50 of the second unit 5 has a larger area than the open side 11 of the space 10 of the first unit 10. The suction effect may be quite low, but due to the fact that air can simply enter the space 50 of the second unit 5 from the free space 60, it is possible for the effect to be sufficient for actually causing a desired ingoing flow of air.

In the space 50 of the second unit 5, any steam that has not condensed onto the milk in the first unit 4 condenses onto the milk after all. Furthermore, a frothing process of the milk takes place, so that as the flow continues, frothed hot milk is obtained. The space 50 of the second unit 5 may comprise a portion 52 which is particularly designed for letting the processes as mentioned take place before the end product is discharged from this space 50. In the shown example, a first portion 53 of the space 50 of the second unit 5 has a more or less constant area, whereas the area is enlarged at a transition of the first portion 53 to the portion 52 with the particular design as mentioned. At a downstream position, the latter portion 52 has an open side 54 for discharging the end product. In practice, the device 3 according to the present invention may comprise tubes for defining the space 10 of the first unit 4 and at least the first portion 53 of the space 50 of the second unit 5, wherein these tubes may have an aligned arrangement.

A notable feature of the device 3 according to the present invention is the fact that the supply of air does not require the application of an air supply channel 30. Instead, a jet of a mixture of steam and milk is made to cross a distance between two spaces 10, 50, wherein an airflow is induced in that process. This means that the device 3 according to the present invention does not need an air supply channel 30. On the basis of this fact, there will be no problems of clogging as far as the supply of air is concerned. The free space 60 is simply too large, and there is nothing in that space 60 on which a deposit of milk elements could take place.

For sake of completeness, it is noted that the steam supply channel 20 of the device 3 according to the present invention may be connected to any suitable means for delivering steam. Furthermore, the milk may be taken from any suitable reservoir.

At the position where the open sides 11, 51 of the spaces 10, 50 of the first unit 4 and the second unit 5 face each other, the units 4, 5 of the device 3 according to the present invention are separated by air. However, that does not alter the fact that the units 4, 5 may be interconnected at one or more other positions, and may be arranged in one supporting frame, for example. Basically, the units 4, 5 are individual units 4, 5 as far as their internal spaces 10, 50 are concerned, as these spaces 10, 50 are separated by air.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

The present invention can be summarized as follows. A device 3 for frothing a liquid comprises a first unit 4 and a second unit 5, wherein the first unit 4 comprises a first space 10 having an outlet 11 for allowing content from the space 10 to flow out of the space 10, and means 40 for supplying the liquid to be frothed to the first space 10, and wherein the second unit 5 comprises a second space 50 for allowing the liquid to mix with air in order for a frothing process to take place. The second space 50 is open to the first space 10, and has an inlet 51 for receiving content from the first space 10, which is separated from the outlet 11 of the first space 10 by air, allowing for a supply of the air to the second space 50 under the influence of a flow of liquid from the first space 10 to the second space 50. Thus, when the device 3 is operated, the air is allowed to flow into the second space 50 and mix with the liquid to be frothed, wherein the air can be made to flow under the influence of a flow of liquid to be frothed from the first space 10 to the second space 50.

As a free inflow of air is possible in the configuration with the two spaces 10, 50, namely at a position where one space 10 ends and another space 50 begins, as seen in a direction of a flow of liquid through the device 3, a certain intake of air can always be guaranteed, wherein known effects which might influence the intake, particularly clogging of a channel 30, are not applicable.

## Claims

1. Device (3) for frothing milk, comprising a first unit (4) and a second unit (5), wherein the first unit (4) comprises a first space (10) having an open side (11) serving as an outlet (11) for allowing content from the space (10) to flow out of the space (10), and a milk supply channel (40) connected to the first space (10),
wherein the second unit (5) comprises a second space (50) for allowing the milk to mix with air in order for a frothing process to take place, wherein the second space (50) is open to the first space (11), and has an open side (51) facing the outlet (11) of the first space and serving as an inlet (51) for receiving content from the first space (10),
wherein the inlet (51) of the second space (50) and the outlet (11) of the first space (10) are located at a distance with respect to each other, in a concentric arrangement,
wherein, at the position where the inlet (51) of the second space (50) and the outlet (11) of the first space (10) face each other, the units (4, 5) of the device (3) are separated by air,
wherein an area of the inlet (51) of the second space (50) is larger than an area of the outlet (11) of the first space (10), such that air is supplied to the second space (50) through the inlet of the second space (50) under the influence of a flow of milk from the first space (10) to the second space (50),
**characterized in that** the device (3) further comprises means for pumping the milk towards the outlet (11) of the first space (10), wherein the pumping means comprise a steam supply channel (20) connected to the space (10) through a constriction (21), and wherein the milk supply channel (40) extends perpendicularly to the steam supply channel (20).

2. Device (3) according to claim 1, wherein a distance between the inlet (51) of the second space (50) and the outlet (11) of the first space (10) is in a range of 1 mm to 10 mm.

3. Device (3) according to claim 1, wherein the outlet (11) of the first space (10) is a free end of a tube which is arranged in the device (3), and wherein the inlet (51) of the second space (50) is a free end of another tube which is arranged in the device (3).

4. Device (3) according to claim 3, wherein longitudinal axes of the tubes, as extending at the free ends of the tubes, are aligned.

5. Device (3) according to claim 1, which is adapted to pump the milk to be frothed only by means of the steam, wherein the pumping means are free from any components besides the steam supply channel (20).

6. Appliance which is suitable to be used for making a beverage containing frothed milk, comprising a device (3) according to claim 1 for frothing milk, wherein the device (3) is removably arranged in the appliance.

## Patentansprüche

1. Vorrichtung (3) zum Aufschäumen von Milch, umfassend eine erste Einheit (4) und eine zweite Einheit (5), wobei die erste Einheit (4) einen ersten Raum (10) mit einer offenen Seite (11), die als ein Auslass (11) dient, um Inhalt vom Raum (10) zu erlauben aus dem Raum (10) zu fließen, und einen Milchzuleitungskanal (40), der mit dem ersten Raum (10) verbunden ist, umfasst,
wobei die zweite Einheit (5) einen zweiten Raum (50) umfasst, um der Milch zu erlauben, sich mit Luft zu vermischen, damit ein Aufschäumprozess stattfindet, wobei der zweite Raum (50) zum ersten Raum (11) hin offen ist, und eine offene Seite (51) hat, die zum Auslass (11) des ersten Raums zeigt und als ein Einlass (51) zum Empfangen von Inhalt vom ersten Raum (10) dient,
wobei der Einlass (51) des zweiten Raums (50) und der Auslass (11) des ersten Raums (10) mit Abstand in Bezug zueinander, in einer konzentrischen Anordnung gelegen sind,
wobei, an der Position, wo der Einlass (51) des zweiten Raums (50) und der Auslass (11) des ersten Raums (10) zueinander zeigen, die Einheiten (4, 5) der Vorrichtung (3) durch Luft getrennt sind,
wobei eine Fläche des Einlasses (51) des zweiten Raums (50) größer ist als eine Fläche des Auslasses (11) des ersten Raums (10), sodass Luft durch den Einlass des zweiten Raums (50) unter dem Einfluss eines Milchflusses vom ersten Raum (10) zum zweiten Raum (50) dem zweiten Raum (50) zugeleitet wird,
**dadurch gekennzeichnet, dass** die Vorrichtung (3) weiter Mittel zum Pumpen der Milch hin zum Auslass (11) des ersten Raums (10) umfasst, wobei die Pumpmittel einen Dampfzuleitungskanal (20) umfassen, der mit dem Raum (10) durch eine Verengung (21) verbunden ist, und wobei sich der Milchzuleitungskanal (40) senkrecht zum Dampfzuleitungskanal (20) erstreckt.

2. Vorrichtung (3) nach Anspruch 1, wobei ein Abstand zwischen dem Einlass (51) des zweiten Raums (50) und dem Auslass (11) des ersten Raums (10) in einem Bereich von 1 mm bis 10 mm ist.

3. Vorrichtung (3) nach Anspruch 1, wobei der Auslass (11) des ersten Raums (10) ein freies Ende eines Rohrs ist, das in der Vorrichtung (3) angeordnet ist, und wobei der Einlass (51) des zweiten Raums (50) ein freies Ende eines anderen Rohrs ist, das in der Vorrichtung (3) angeordnet ist.

4. Vorrichtung (3) nach Anspruch 3, wobei Längsachsen des Rohrs, wie sie sich an den freien Enden der Rohre erstrecken, ausgerichtet sind.

5. Vorrichtung (3) nach Anspruch 1, die angepasst ist, die Milch zu pumpen, die nur mittels des Dampfes aufzuschäumen ist, wobei die Pumpmittel frei von Komponenten nebst dem Dampfzuleitungskanal (20) sind.

6. Gerät, das geeignet ist, zum Zubereiten eines Getränks, das aufgeschäumte Milch beinhaltet, verwendet zu werden, umfassend eine Vorrichtung (3) nach Anspruch 1 zum Aufschäumen von Milch, wobei die Vorrichtung (3) im Gerät entfernbar angeordnet ist.

## Revendications

1. Dispositif (3) pour faire mousser du lait, comprenant une première unité (4) et une seconde unité (5), dans lequel la première unité (4) comprend un premier espace (10) ayant un côté ouvert (11) servant de sortie (11) pour permettre au contenu provenant de l'espace (10) de s'écouler hors de l'espace (10), et un canal d'alimentation en lait (40) relié au premier espace (10),
dans lequel la seconde unité (5) comprend un second espace (50) pour permettre au lait de se mélanger avec de l'air pour qu'un processus de moussage ait lieu, dans lequel le second espace (50) est ouvert sur le premier espace (11), et a un côté ouvert (51) faisant face à la sortie (11) du premier espace et servant d'entrée (51) pour recevoir le contenu provenant du premier espace (10),
dans lequel l'entrée (51) du second espace (50) et la sortie (11) du premier espace (10) sont situées à une certaine distance l'une de l'autre, dans un agencement concentrique,
dans lequel, à la position où l'entrée (51) du second espace (50) et la sortie (11) du premier espace (10) se font face, les unités (4, 5) du dispositif (3) sont séparées par de l'air,
dans lequel une surface de l'entrée (51) du second espace (50) est plus grande qu'une surface de la sortie (11) du premier espace (10), de sorte que de l'air est fourni au second espace (50) à travers l'entrée du second espace (50) sous l'influence d'un flux de lait allant du premier espace (10) au second espace (50),
**caractérisé en ce que** le dispositif (3) comprend en outre un moyen pour pomper le lait vers la sortie (11) du premier espace (10), dans lequel le moyen de pompage comprend un canal d'alimentation en vapeur (20) relié à l'espace (10) par l'intermédiaire d'une constriction (21) et dans lequel le canal d'alimentation en lait (40) s'étend perpendiculairement au canal d'alimentation en vapeur (20).

2. Dispositif (3) selon la revendication 1, dans lequel une distance entre l'entrée (51) du second espace (50) et la sortie (11) du premier espace (10) est dans une plage de 1 mm à 10 mm.

3. Dispositif (3) selon la revendication 1, dans lequel la sortie (11) du premier espace (10) est une extrémité libre d'un tube qui est agencé dans le dispositif (3) et dans lequel l'entrée (51) du second espace (50) est une extrémité libre d'un autre tube qui est agencé dans le dispositif (3).

4. Dispositif (3) selon la revendication 3, dans lequel les axes longitudinaux des tubes, comme s'étendant au niveau des extrémités libres des tubes, sont alignés.

5. Dispositif (3) selon la revendication 1, qui est conçu pour pomper le lait à faire mousser seulement au moyen de la vapeur, dans lequel le moyen de pompage est exempt de tout composant au-delà du canal d'alimentation en vapeur (20).

6. Appareil qui est approprié pour être utilisé pour fabriquer une boisson contenant du lait mousseux, comprenant un dispositif (3) selon la revendication 1 pour faire mousser du lait, dans lequel le dispositif (3) est agencé de façon amovible dans l'appareil.
